# EUROPEAN PATENT APPLICATION

(11) **EP 2 113 850 A2**
(43) Date of publication of application: **04.11.2009**
(21) Application number: 09156827.9
(22) Date of filing: 31.03.2009
(51) Int. Cl.: G06F 17/30

(54) **Managing electronic data with index data corresponding to said electronic data and secure access of electronic documents and data from client terminal**

(30) Priority: 30.04.2008 US 112709; 15.10.2008 US 251880
(71) Applicant: Ricoh Company, Limited, Ohta-ku Tokyo 143-8555 (JP)
(72) Inventor: Uchida, Yuki, Cupertino, CA 95014 (US); Yoon, Chin, Cupertino, CA 95014 (US); Harrison, James, Cupertino, CA 95014 (US)
(74) Representative: Schwabe - Sandmair - Marx

(57) **Abstract**

An improved approach for managing and sending electronic data which allows one to access electronic data corresponding to a hardcopy document is provided. For example, when the hardcopy bearing a visible image is output, an identification image corresponding to identification data identifying the document is added to the visible image. The identification data can be recognized from the identification image, and used to retrieve various information in a database corresponding to the document.

An improved approach for secure access of electronic documents and data is also provided.

## Description

### FIELD OF THE INVENTION

This disclosure relates to systems, apparatuses and methodologies for managing electronic data, and in particular, an approach for managing electronic data wherein index data (or metadata) appropriate according to a data type of the electronic data is generated and maintained for the electronic data.

This disclosure also relates to systems, apparatuses and methodologies for managing electronic documents and data, and in particular, an approach that allows secure access of electronic documents and data from a client terminal.

### BACKGROUND OF THE INVENTION

In the current information age, it has often been discussed that proliferation of information technology (IT) can lead to more convenience, efficiency, productivity, enjoyment, etc., in life. The extensive use and development of IT facilities in an enterprise (or other organization) environment, as well as in a home environment, has been accompanied by escalating accumulations of electronic data.

There are many instances in which a user (that is, anyone having access to such electronic data) may have a need to search for specific data in a world of heterogeneous data. Such task can be daunting even if a search engine is used. Typically, search tools operate based on one or more keywords, or free text, supplied by the user. Such searches can return large numbers of results, depending on the specific keywords used. However, the results still need to be reviewed for relevancy, since keyword match does not necessarily correlate to relevance. Further, there is generally a remaining concern that the most relevant data is not in the returned results (because the appropriate keyword or free-text for obtaining such data was perhaps not used).

There remains a need for an improved approach for managing electronic data that allows a user to readily reference and/or obtain relevant electronic data, and alleviates the concern that the relevant data has not been found and/or identified.

The current IT trend, particularly for enterprises and other organizations, is to obtain data, document and application on-demand, in an outsourcing approach known nominally as Software as a Service (SaaS). SaaS is typically an IT approach wherein enterprises and users obtain access, over the Internet, to applications and related services that would otherwise have to be located in their own personal or enterprise computers.

SaaS is often a popular approach for enterprises because, instead of a major upfront investment (for example, tens of thousands to millions of dollars) to create and maintain IT infrastructure, the enterprise pays a monthly fee to access applications. In addition, such access is generally obtained, without a time-consuming in-house rollout of technology. Further, SaaS allows the enterprise to focus on its own operations, without requiring employing a full IT staff to maintain the applications.

In the current IT environment in which SaaS is the dominant approach, application, data (and document) storage and user interface are by default (that is, generally) hosted by the SaaS vendor at an off-site location. The customer can access this service via a web connection. However, such approach typically has vulnerabilities from data-thefts and slow performance, particularly when large quantities of data are being retrieved. Accordingly, many enterprises prefer to keep their electronic data and documents behind their own firewall, notwithstanding the attractiveness of the SaaS architecture.

There remains a need for an improved approach for managing electronic data and documents, to keep the documents and data on-site, allow a user to readily reference and/or obtain the electronic data and documents, and avoid a large and cumbersome software system on site for such data/document management and access.

### SUMMARY OF THE INVENTION

This disclosure describes tools (in the form of systems, apparatuses and methodologies) for managing electronic data utilizing index data or metadata which allow one, on demand, to identify and/or retrieve relevant data (such as one or more application data, e-mail data, voice data, audio data, video data, image data, graphics data, multi-media data, etc.).

In an aspect of this disclosure, index information indicating a plurality of index items is generated and maintained. Different types of electronic data are associated with respective different subsets of index items, and the index information indicates for each specific type of electronic data a corresponding subset of the index items associated with the specific data type.

In another aspect of this disclosure, for each specific electronic data, the data type of the specific electronic data is determined, the index information is used to determine appropriate index items for the specific electronic data, and metadata corresponding to such appropriate index items are generated for the specific electronic data. That is, the metadata generated and maintained for the specific electronic data corresponds to each specific index item indicated in the index information for the data type of the specific electronic data.

In yet another aspect of this disclosure, when an additional index item is added to the index information, the metadata is updated in view of the newly added index items, on an as-needed basis (that is, for some types of electronic data, the metadata is not modified since the added index item is not relevant to such types of electronic data, as determined by referring to the index information).

The index items and metadata correspond to specific properties of the electronic data that a user can consider for determining (without scrutinizing the electronic data itself) whether the data is relevant and/or for identifying relevant data. For each type of electronic data, there is a different subset of index items that would be of interest to the user.

This disclosure also describes tools (in the form of systems, apparatuses and methodologies) for secure access of electronic data and documents maintained within an intranet from a user terminal that is within the intranet (or similar secure networked environment), while document and data management are provided by a SaaS-type management service (off-site).

In an aspect of this disclosure, a management service tracks the documents and data in a document database (on-site, that is, within the intranet), and when a document retrieval request is received from the user terminal, assuming the management service authenticates user credential information received from the user terminal, the management service transmits an authorization key and a pointer to the requested document in the document database to the user terminal. Such authorization key and pointer to the requested document allows the user terminal to obtain the requested document from the document database. On the other hand, the authorization key is generated for the specific user, and therefore user authentication information is supplied along with the authorization key to the document database.

The above-mentioned process can be transparent to the user, other than prompts, if necessary, to obtain user credential information. The user submits a document retrieval request from the user terminal, and the system operates autonomously thereafter, until the requested document is retrieved (or an error message is returned).

In another aspect of this disclosure, the management service maintains searchable metadata (off-site) for the documents in the document database. The metadata for a specific document can represent properties of the document and can include a hyperlink to the specific document in the document database. A monitor or agent (on-site) monitors access to documents and data in the document database and when an access event (for example, read, edit, insert delete, etc.) occurs, the monitor or agent captures access event metadata corresponding to the access of the specific document and transmits the access event metadata through the network to the management service. When the management service receives access event metadata corresponding to access of a specific document in the document database, the management service updates metadata maintained for the specific document, based on the access event metadata.

In yet another aspect of this disclosure, the management service allows the user to log-in through the network and query (that is, submit a search request for searching) the metadata to find desired documents or data. The management service compares the query to the metadata maintained for the documents in the document database, and returns search results (for example, a list of documents in the document database that match the query, with associated information, such as selected properties of the documents). The user can then select one or more documents from the search results, displayed through a user interface of the user terminal, and a document retrieval request for the selected documents is generated and transmitted to the management service (thereby triggering the above-mentioned process at the management service for a document retrieval request).

### BRIEF DESCRIPTION OF THE DRAWINGS

Fig. 1 shows a block diagram of a system, according to an exemplary embodiment of this disclosure;
Fig. 2 shows a block diagram of a management server, according to an exemplary embodiment of this disclosure;
Fig. 3 shows a block diagram of an exemplary configuration of a terminal shown in Fig. 1;
Fig. 4 shows a block diagram of a multi-function apparatus, according to an exemplary embodiment of this disclosure;
Fig. 5 shows an example of an index table;
Fig. 6 shows an example of a user interface screen showing a summary of properties of an electronic document;
Fig. 7 shows a flow chart for a data indexing or electronic discovery process, in accordance with an exemplary embodiment of this disclosure;
Fig. 8 shows data flow in the process of Fig. 7;
Fig. 9 shows a flow chart for an indexing method, in an exemplary embodiment of this disclosure;
Fig. 10 shows a flow chart of a method for preparing for indexing, in an exemplary embodiment of this disclosure;
Fig. 11 shows a flow chart for a retrieval method, in an exemplary embodiment of this disclosure;
Fig. 12 shows a flow chart of a method for adding a new index item, in an exemplary embodiment of this disclosure;
Fig. 13 shows data flow in the method of Fig. 12; and

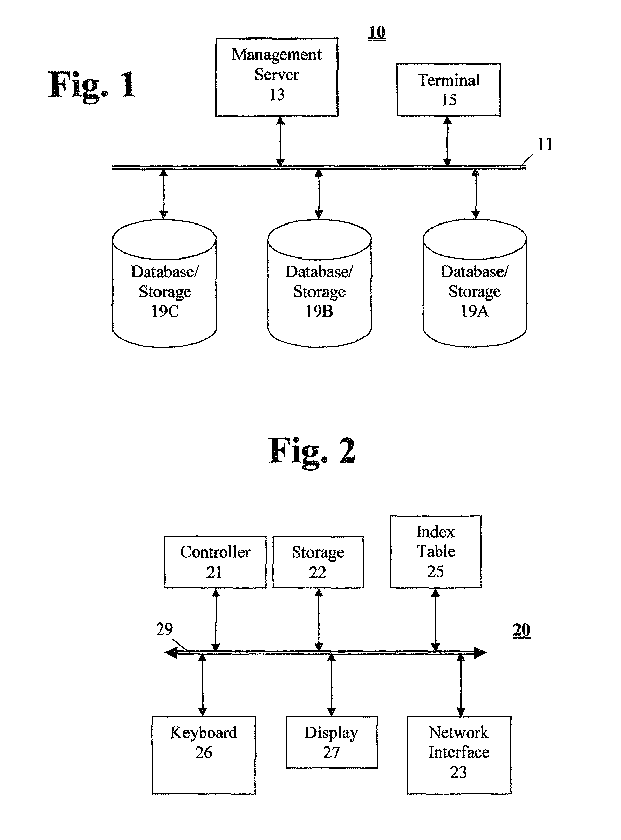

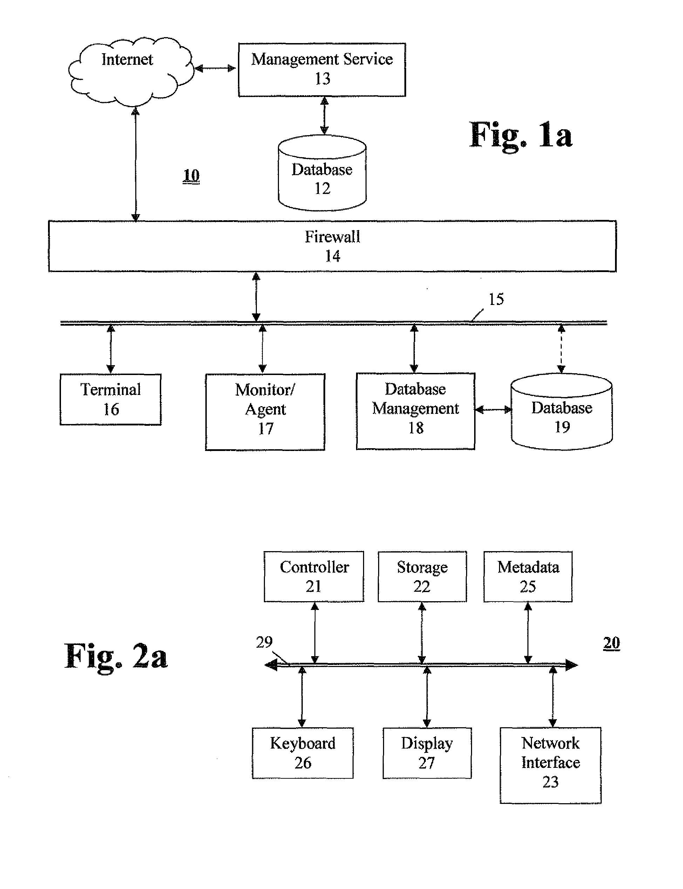

Fig. 1a shows a block diagram of a system, according to an exemplary embodiment of this disclosure;
Fig. 2a shows a block diagram of a server that can be configured to provide the management service shown in Fig. 1a;

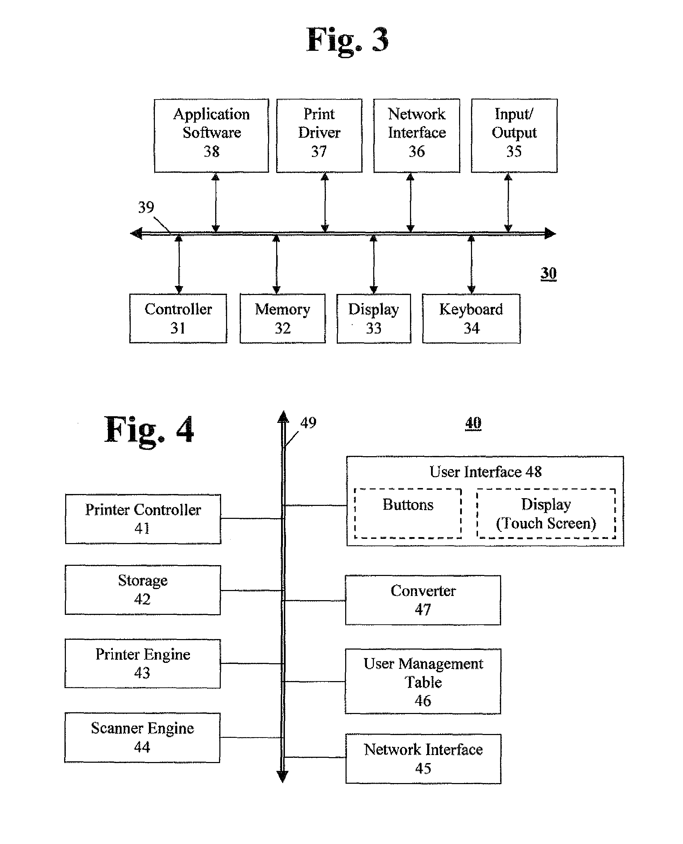

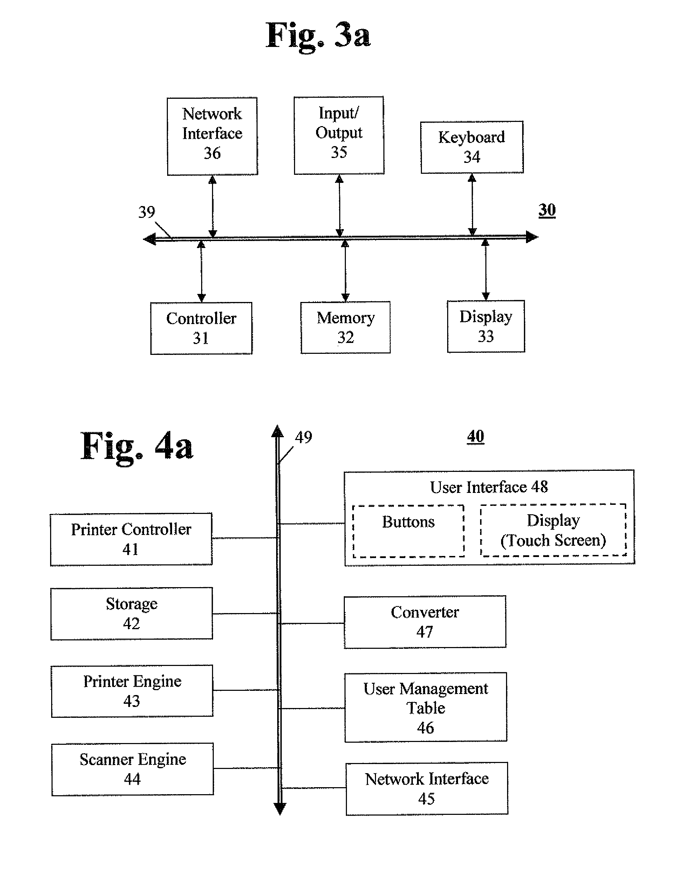

Fig. 3a shows a block diagram of an exemplary configuration of a terminal shown in Fig. 1a;
Fig. 4a shows a block diagram of a multi-function apparatus which can serve as a user terminal and/or as a database, according to an exemplary embodiment of this disclosure;

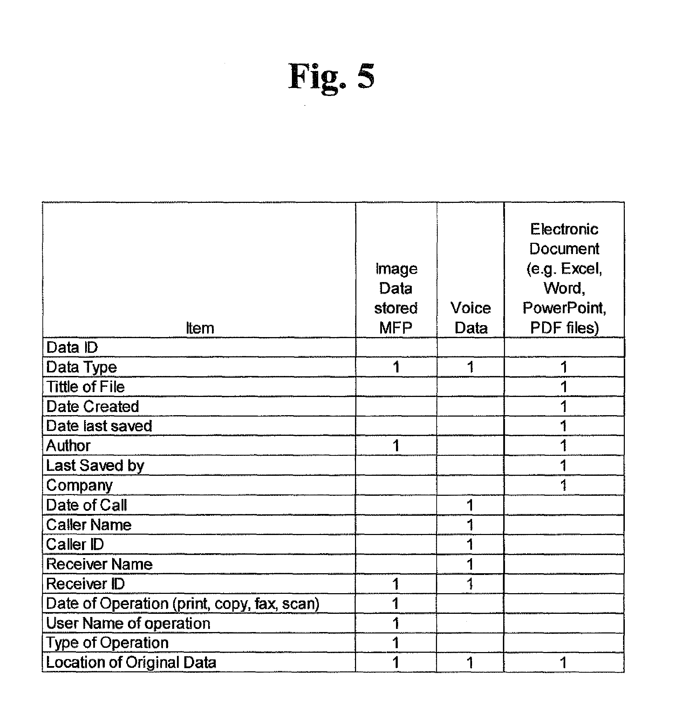

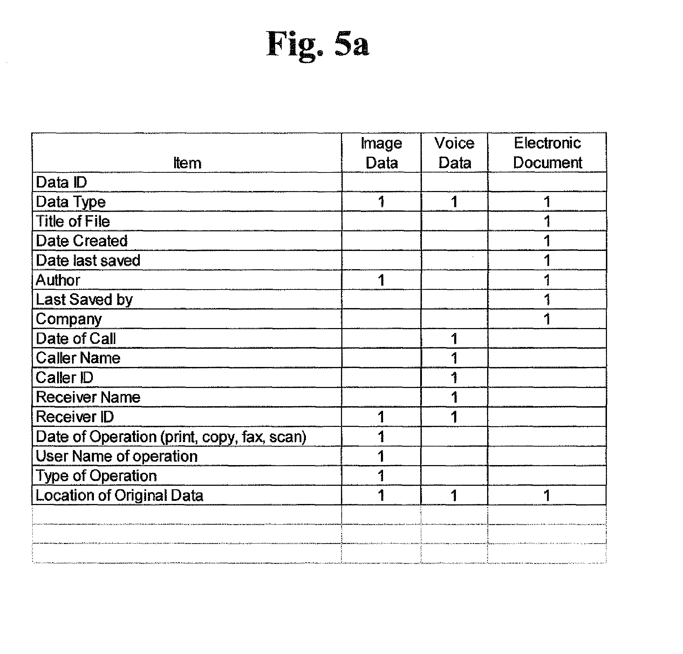

Fig. 5a shows an example of an index table;

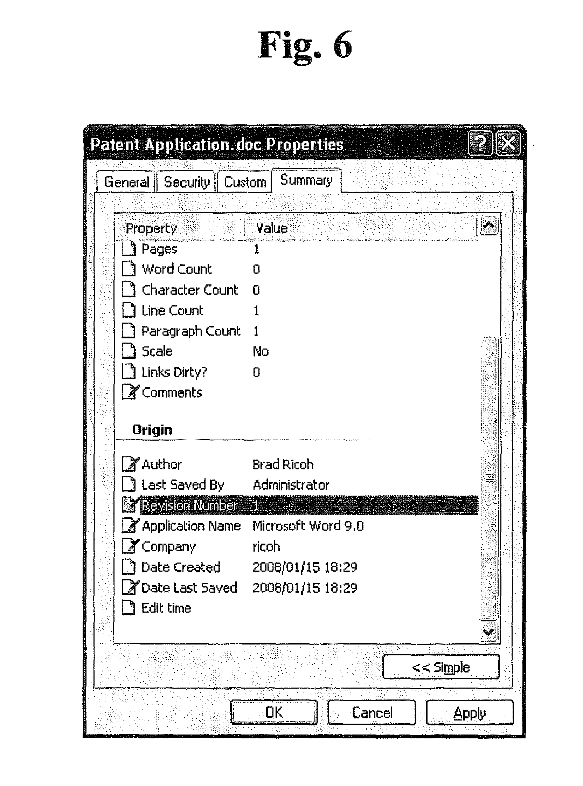

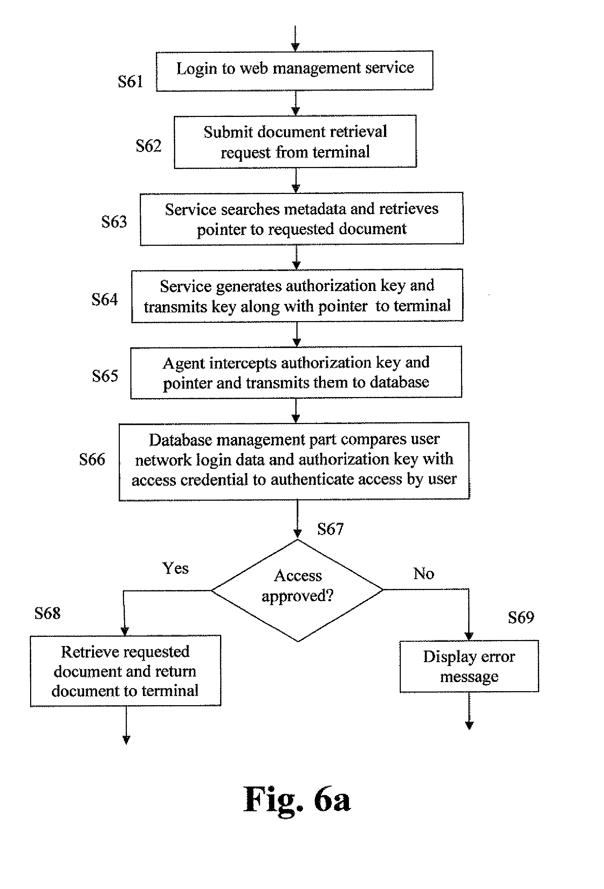

Fig. 6a is a flow chart illustrating an example of a work flow in the exemplary embodiment of Fig. 1a;

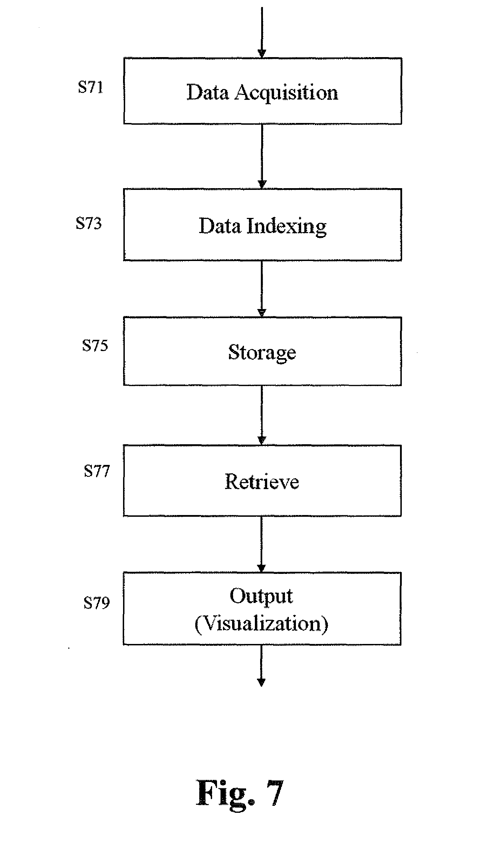

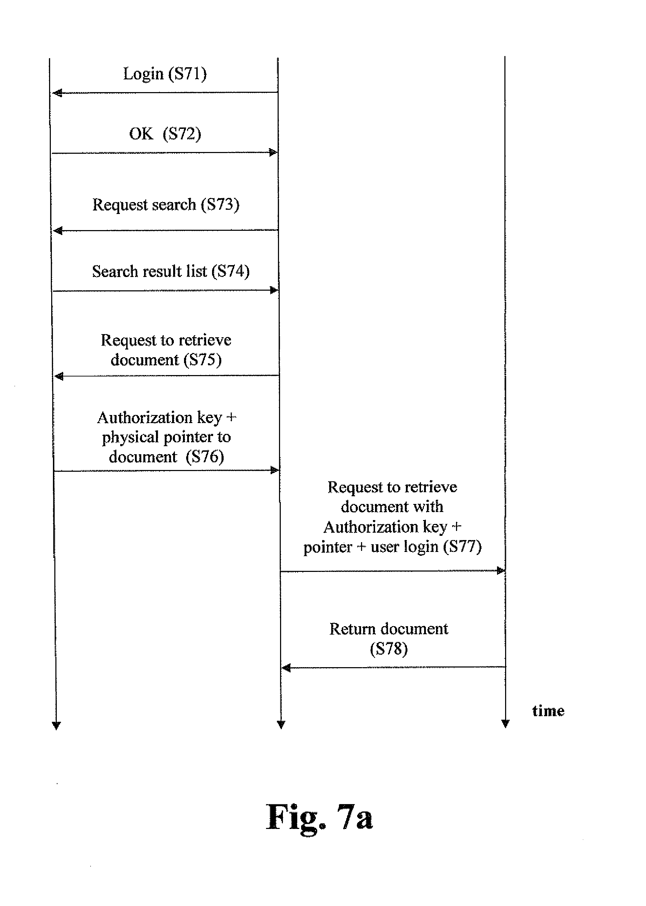

Fig. 7a shows a schematic view of an example of data flow in another exemplary embodiment;

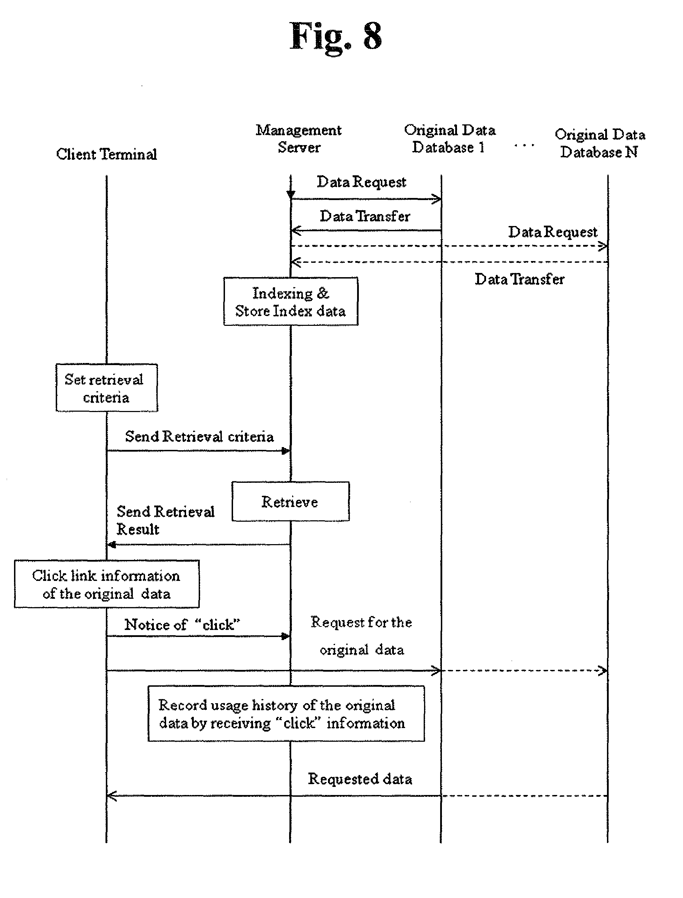

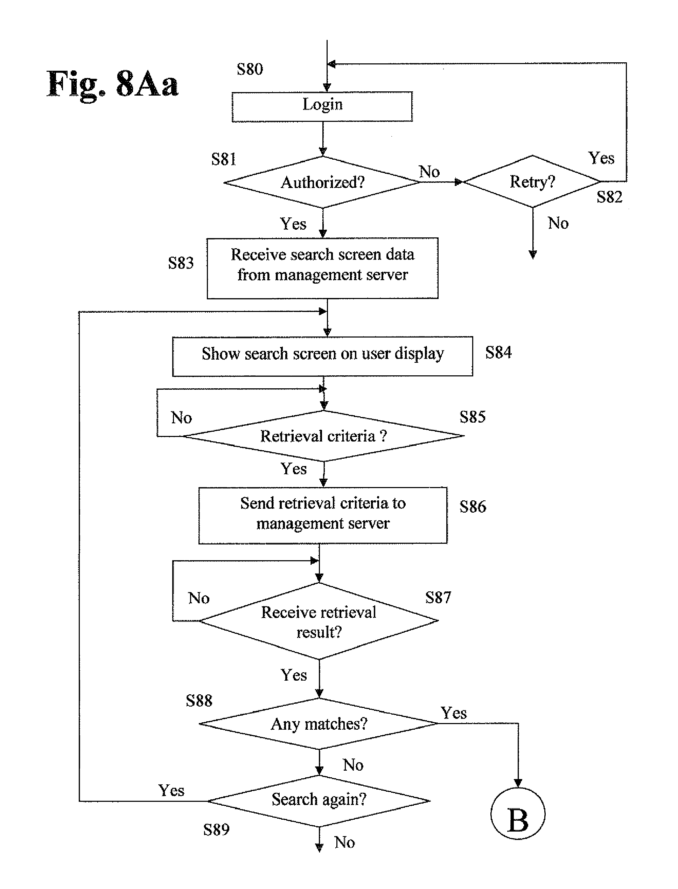

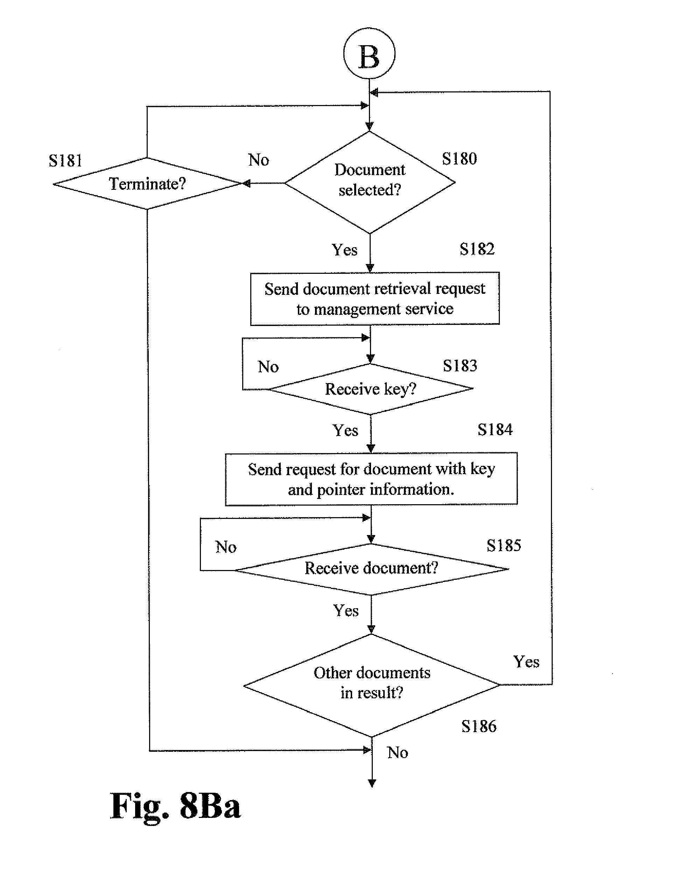

Figs. 8Aa and 8Ba show a flow chart illustrating an example of a work flow on the user terminal side, in another exemplary embodiment;

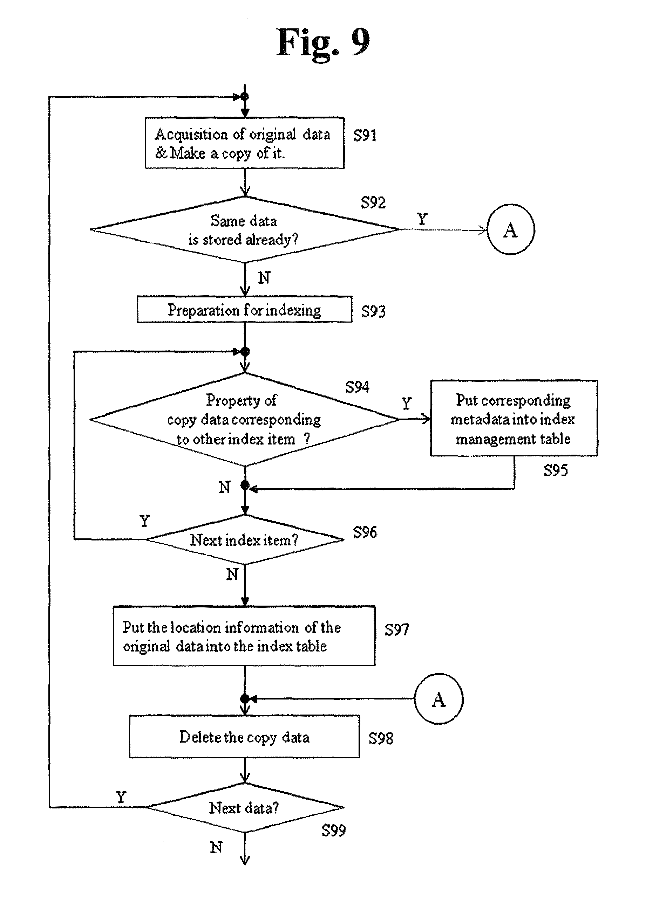

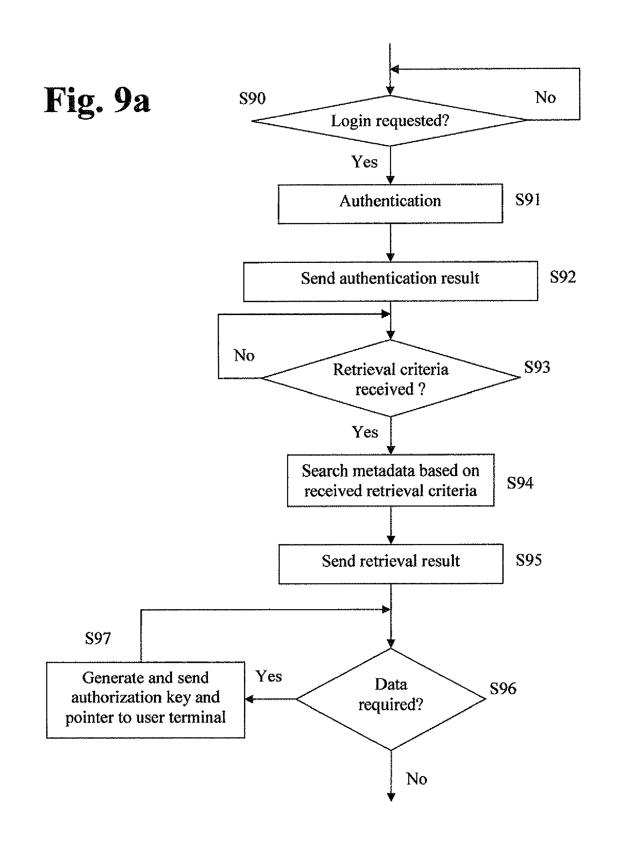

Fig. 9a shows a flow chart of an example of a retrieval process on the management service side, in another exemplary embodiment; and

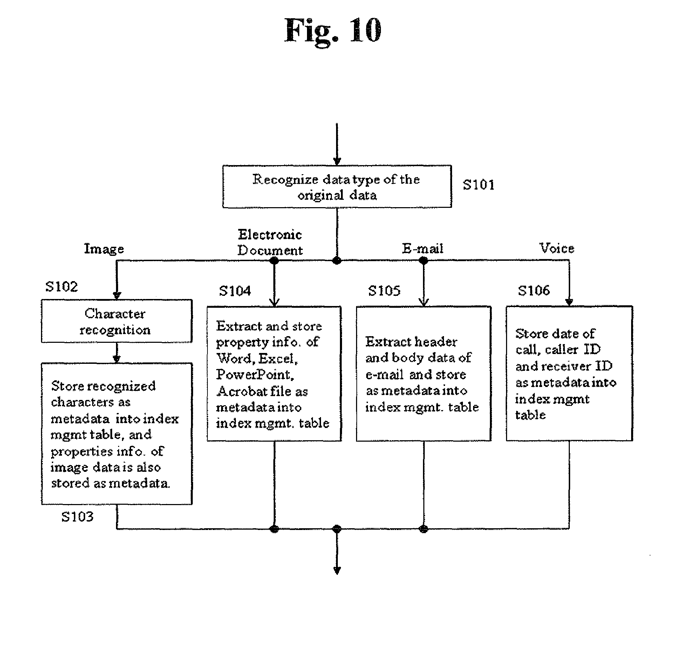

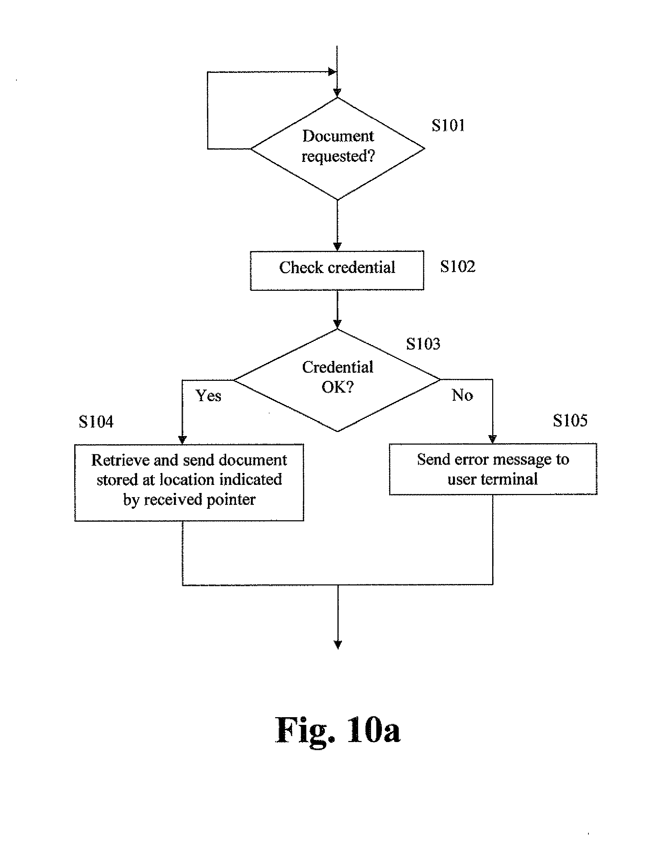

Fig. 10a shows a flow chart for a process performed at the document database side, in another exemplary embodiment.

### DETAILED DESCRIPTION OF THE PRESENT INTENTION

In describing examples and exemplary embodiments illustrated in the drawings, specific terminology is employed for the sake of clarity. However, this disclosure is not intended to be limited to the specific terminology so selected and it is to be understood that each specific element includes all technical equivalents that operate in a similar manner.

Referring now to the drawings, wherein like reference numerals designate identical or corresponding parts throughout the several views, Fig. 1 shows a block diagram of a system for managing electronic data, in an example of this disclosure. System 10 includes a network 11, user terminal 12, management server 13 and databases or data storage parts 19A-19C.

While the example shown in Fig. 1 includes one terminal and three databases or storage parts, it should be appreciated that such numbers of terminals and databases or data storage parts are arbitrary and are selected as an example in order to facilitate discussion, and that the subject matter of this disclosure can be implemented in a system including one or more terminals and one or more databases or data storage parts. Further, it is noted that a terminal and a database or data storage part can included in one integrated device (or of course can be separate devices).

Each of the databases or storage parts 19A-19C can comprise one or more structural or functional parts that have or support a storage function. For example, each of the databases or data storage parts 19A-19C can be, or can be a component of, a source of electronic data, such as an e-mail server, a file server, a multi-function peripheral device (MFP or MFD), a voice data server, an application server, etc. Accordingly, it should be appreciated that the term "electronic data" as used herein, in its broadest sense, can comprise any data that a user may wish to access, retrieve, review, etc.

Each database or storage part can store a corresponding type of data (for example, storage part 19A stores image data, storage part 19B stores electronic documents, and storage part 19C stores voice data, etc.) or multiple types of data (for example, storage part 19A stores image data and e-mail data, storage part 19B stores electronic documents and application files, and storage part 19C stores voice data, audio data, video data, multimedia files, etc.), with the type(s) of data stored in one storage part being mutually exclusive from, or alternatively overlapping with, the type(s) of data stored in another storage part. Further, the databases or storage parts 19A-19C are shown as distinct parts (for example, resident in respective servers or multi-function devices), each connected to network 11. However, in another example, the databases or storage parts 19A-19C may be resident in one device, such as a multi-function device wherein storage part 19A stores image data from scan operations in the multi-function device, storage part 19B stores image data from print operations in the multi-function device, storage part 19C stores image data from facsimile operations in the multi-function device, etc. In any event, the management server 13 tracks and monitors the various types of data that are stored in the databases or data storage parts 19A-19C.

Fig. 2 shows an exemplary constitution of a management server. As shown in Fig. 2, management server 20 includes a controller (or central processing unit) 21 that communicates with a number of other components, including memory or storage part 22, network interface 23, keyboard 26 and display 27, by way of a system bus 29.

The management server may be a special-purpose device (such as including one or more application specific integrated circuits or an appropriate network of conventional component circuits) or it may be software-configured on a conventional personal computer or computer workstation with sufficient memory and processing capabilities, as will be appreciated to those skilled in the relevant arts. Further, if adequate storage, processing and communication capabilities are included, the computing device can double as a database server and/or as a print server (which in many respects can be configured similarly).

In server 20, controller 21, memory/storage 22, network interface 23, keyboard 26 and display 27 are conventional, and therefore in order to avoid masking the inventive aspects of this disclosure, such conventional aspects will not be discussed in detail herein.

The controller 21 executing program code instructions controls server operations, including maintaining index table 25 which includes index information indicating various index items represented in the index table and indicating for each specific type of electronic data a corresponding subset of the index items associated with the specific type of electronic data.

An example of an index table is shown in Fig. 5. Data type and location of data are index items common to each type of data. In the example of Fig. 5, the index items for image data are author, receiver ID (such as network address of device from which data was received), type of operation (print, copy, fax, scan, etc.), date of operation and name of user who performed the operation, the index items for voice data are date of call, caller name, caller ID (that is, telephone number), receiver name and receiver ID, and the index items for electronic documents are title or name of file, date created, date last saved, author, last saved by and company.

It should be apparent that index information in the subject matter of this disclosure is not limited to the index items shown in Fig. 5 which merely present an example. Further, although index information is maintained in the form of an index table in the exemplary embodiment of Fig. 2, it should be apparent to those skilled in the art that the index information can be organized in any of various manners that do not involve a table. For example, such index information or index data can be organized as data objects through object-oriented programming, and/or via linked lists, data linking, a dynamic or relational database, etc.

As mentioned above, the management server 13 tracks and monitors the various types of data that are stored in the databases or storage parts 19A-19C. For each specific electronic data, the management server 13 determines the data type of the specific electronic data, uses the index table to determine appropriate index items for the specific electronic data, and generates and maintains metadata corresponding to such appropriate index items for the specific electronic data. The index items associated in the index table with a specific data type, in a preferred embodiment, correspond to appropriate properties of data of the specific data type. Thus, each metadata for the specific electronic data is in accord with one or more properties of the specific electronic data. An example of a user interface screen showing a summary of properties of an electronic document is shown in Fig. 6.

As an example, metadata maintained for specific electronic image data can indicate an operation (e.g., print, facsimile, scan, etc.) last performed in connection with the specific electronic image data. In another example, the data management part includes in metadata maintained for specific electronic mail data a copy of header and body data of the specific electronic mail data. As another example, the data management part includes in metadata maintained for specific electronic voice data date, caller identification and receiver identification of the specific electronic voice data.

Additional index items can be added to the index table. For example, the management server 13 can provide a user interface through which a user or system administrator can add such index items. In another example, one or more index items can be added through an automated (software-driven) system update. In yet another example, the management server 13, through its monitoring of the databases or storage parts, determines that new data stored in one of the databases or storage parts includes properties that require an additional index item to be created and added to the index table, and proceeds either to automatically create and add such additional index item to the index table, or to prompt a user (who is, for example, author, last user to modify or save the data) or administrator to add such index item.

In any event, when an index item is added to the index table, the management server 13 updates, for each electronic data, the metadata appropriately in view of the added index item. For some types of electronic data, the metadata is not modified since the added index item may not be relevant to such types of electronic data, as determined by referring to the index information.

The data management part 13 can monitor access to each specific electronic data, and maintain usage history metadata indicating the specific accesses to the specific electronic data. The usage history metadata maintained for the specific electronic data can indicate, for example, identification of a user who last accessed the specific electronic data and time and date of that last access. In another example, the usage history metadata maintained for the specific electronic data can indicate a destination to which the specific electronic data was transmitted.

In the example shown in Fig. 2, the management server 20 includes the network interface 23 for communications through a network, such as communications through the network 11 with the terminal 12 and/or databases or storage parts 19A-19C in Fig. 1. However, it should be appreciated that the subject matter of this disclosure is not limited to such configuration. For example, the management server may communicate with the databases or storage parts through direct connections and/or through a network to which the user terminal is not connected. As another example, the data management apparatus need not be a server that services client terminals, but rather may communicate with the terminal on a peer basis, or in another fashion.

The network 11 can be a local area network, a wide area network or any type of network such as an intranet, an extranet (for example, to provide controlled access to external users, for example through the Internet), the Internet, etc., or a combination thereof. Further, other communications links (such as a virtual private network, a wireless link, etc.) may be used as well for the network 11. In addition, the network 11 preferably uses TCP/IP (Transmission Control Protocol/Internet Protocol), but other protocols can also be used. How devices can connect to and communicate over the network 11 is well-known in the art and is discussed for example, in "How Networks Work", by Frank J. Derfler, Jr. and Les Freed (Que Corporation 2000) and "How Computers Work", by Ron White, (Que Corporation 1999), the entire contents of each of which are incorporated herein by reference.

The user terminal 12 can be any computing device, including but not limited to a personal, notebook or workstation computer, a kiosk, a PDA (personal digital assistant), a mobile phone or handset, another information terminal, etc., that can communicate through the network 11 with other devices. Although only one user terminal is shown in Fig. 1, it should be understood that the system 10 can include a plurality of user terminal devices (which can have similar or different configurations).

The terminal 12 can interact (exchange data) with the management server 13 via the network 11, so as to benefit from the services provided by the server. For example, a request to retrieve data from the databases or storage parts 19A-19C can be sent from the terminal 12 to the server 13. As another example, the terminal 12 can transmit data to be deposited in the database, and other information may be communicated as well, such as, for example, user identification, password, the name of the person sending the data, the name of the author of the data, the date and time of creation or modification of the data, the version of the data, etc.

An example of a configuration of the user terminal (for example, as a computer) is shown schematically in Fig. 3. In Fig. 3, computer 30 includes a controller (or central processing unit) 31 that communicates with a number of other components, including memory 32, display 33, keyboard (and/or keypad) 34, other input/output (such as mouse, touchpad, stylus, microphone and/or speaker with voice/speech interface and/or recognition software, etc.) 35, network interface 36, print driver 37 and application software 38, by way of internal bus 39.

The memory 32 can provide storage for program and data, and may include a combination of assorted conventional storage devices such as buffers, registers and memories [for example, read-only memory (ROM), programmable ROM (PROM), erasable PROM (EPROM), electrically erasable PROM (EEPROM), static random access memory (SRAM), dynamic random access memory (DRAM), nonvolatile random access memory (NOVRAM), etc.].

The network interface 36 provides a connection (for example, by way of an Ethernet connection or other network connection which supports any desired network protocol such as, but not limited to TCP/IP, IPX, IPX/SPX, or NetBEUI) to network 11.

Print driver 37 and application software 38 are shown as components connected to the internal bus 39, but in practice are typically stored in storage media such as a hard disk or portable media, and/or received through the network 11, and loaded into memory 32 as the need arises.

A user interface is provided and is configured through software natively or received through a network connection, to allow the user to access electronic data or content on the terminal and/or via the network, interact with network-connected devices and services, enjoy other software-driven functionalities, etc. For example, a browser (such as Internet Explorer™, Netscape Navigator™, a proprietary browser, etc.) may be provided on the terminal so that a user of the terminal can use browsing operations to access the databases or storage parts 19A-19C in system 10.

Additional aspects or components of the computer 30 are conventional (unless otherwise discussed herein), and in the interest of clarity and brevity are not discussed in detail herein. Such aspects and components are discussed, for example, in "How Computers Work", by Ron White (Que Corporation 1999), and "How Networks Work", by Frank J. Derfler, Jr. and Les Freed (Que Corporation 2000), the entire contents of each of which are incorporated herein by reference.

An example of a multi-function device (MFD) or multi-functional peripheral device (MFP) which includes scanning and printing functions, and additionally can serve as a user terminal for entering, saving and accessing electronic data, and in which one or more databases or data storage parts can be resident will be discussed below with reference to Fig. 4.

MFP apparatus 40 can include a controller 41, and various elements connected to the controller 41 by an internal bus 49. The controller 41 controls and monitors operations of the MFP 40. The elements connected to the controller 41 include storage 42 (for example, random access memory, read-only memory, hard disk drive, portable storage media drive such as for optical discs, magnetic discs, magneto-optical discs, etc., semiconductor memory cards, combinations of storage media, etc.), printer engine 43, scanner engine 44, network interface (I/F) 45, converter 47 for converting data from one format to another format (for example, a format suitable for printing, faxing, e-mailing, etc.), and user interface 48. The controller 41 also utilizes information stored in user management table 46 to authenticate the user and control user access to the functionalities of the MFP.

Storage 42 can include one or more storage parts or devices, and program code instructions can be stored in one or more parts or devices of storage 42 and executed by the controller 41 to carry out the instructions. Such instructions can include instructions for performing specified functions (such as printing, scanning, faxing, copying, e-mailing, etc.) of the MFP, to enable the MFP to interact with a terminal and/or the management server (for example, 13, 20, etc.), as well as perhaps other external devices, through the network interface 45, and to control the converter 47, access data in the user management table 46, and interactions with users through the user interface 48.

The user interface 48 includes one or more display screens that display, under control of controller 41, information allowing the user of the MFP 40 to interact with the MFP. The display screen can be any of various conventional displays (such as a liquid crystal display, a plasma display device, a cathode ray tube display, etc.), but preferably is equipped with a touch sensitive display (for example, liquid crystal display) and is configured to provide a GUI (graphical user interface) based on information input by an operator of the MFP, so as to allow the operator to interact conveniently with services provided on the MFD, or with the MFD serving as terminal for accessing electronic data or other content through the network. For example, a browser (such as Internet Explorer™, Netscape Navigator™, a proprietary browser, etc.) may be provided on the MFD so that the operator can use browsing operations to access the databases or storage parts 19A-19C in system 10. As another example, the operator can scan a document, and use the browser to upload the image data from scanning of the document (and specify additional information associated with the image) to one of the databases or storage parts 19A-19C.

The display screen does not need to be integral with, or embedded in, a housing of the MFP, but may simply be coupled to the MFP by either a wire or a wireless connection. The user interface 48 may include keys and/or buttons (such as graphical keys or buttons, or other graphical elements, of a GUI on a touch screen display) for inputting information or requesting various operations. Alternatively, the user interface 48 and the display screen may be operated by a keyboard, a mouse, a remote control, voice recognition, or eye-movement tracking, or a combination thereof.

Since the MFP 40 is typically shared by a number of users, and is typically stationed in a common area, the MFP preferably prompt the user to supply authentication information, such as user name (or other user or group information), password, access code, etc. The authentication information can be compared to data stored in the user management table 46 to confirm that the user is authorized to use the MFP. The authentication information may also be stored for the session and automatically supplied if access to other devices through the network requires it. On the other hand, such other devices may prompt the user to supply other authentication information through the user interface.

Another way for authenticating a user is for a user to swipe an access card through a card reader (not shown). Such access card can include user identification information, as well as account information to enable the management server to identify and authenticate the user, determine any credits remaining in the user (or group) account and allow such information to be displayed at the MFP upon request of the user.

Other methods of authentication may also be used. For example, the multi-function device may be equipped with one or more biometrics means (such as comparing fingerprints, palm prints, voice or speech, retinas or irises, facial expressions or features, signature, etc.).

Printer engine 43, scanner engine 44 and network interface 45 (similar to interface 23 in Fig. 2 and interface 36 in Fig. 3) are otherwise conventional, and therefore, a detailed description of such conventional aspects are omitted in the interest of clarity and brevity (so as not to mask the novel aspects of the subject matter of this disclosure).

The MFD 40 can have any or all of the functions of similar devices conventionally known, such as for scanning, editing and storing images, sending a fax, sending and receiving e-mails with or without attachments, accessing files by FTP or another protocol or facility, surfing the Web, etc. Further, multi-functional devices or multi-function peripheral devices can play a prominent role to convert hardcopy documents to electronic documents.

An exemplary embodiment wherein the subject matter of this disclosure is applied to an electronic discovery (or data indexing) system is described infra with reference to Figs 7-13. Electronic discovery is a process whereby a party to a legal proceeding (or even some nonparties, having a legal obligation in more restricted circumstances) in the United States provide requested information or documents in electronic form (that is, electronic data). In electronic discovery, problems arise with respect to, in many instances, vast quantities of electronic documents and/or data that must be reviewed, whether for a party's document/data production in a litigation against another party, for conducting an internal investigation, or for satisfying government reporting requirements. A party's ability to manage each matter that can be mission critical depends on how fast it can capture, identify, review, assess, and produce relevant documents and data. The volume of electronic documents and data can far exceed paper documents.

An electronic discovery (or data indexing) system, with the subject matter of this disclosure applied therein, allows a party to quickly and systematically categorize or index the electronic data. For example, using such a system, a user or administrator can specify index items of interest for each type of data subject to discovery. The index information is generated and maintained, and additional index items can be added throughout the process. The generation and maintenance of index information can be both automatic and manual and can be ongoing throughout the electronic discovery process. That is, the system can proceed to analyze properties of the electronic data to determine index items, with or without user input or selection of index items for each data type. As new data is acquired, the index information may be modified or additional index information may be added. Thus, generation and maintenance of index information can be ongoing throughout the electronic discovery process.

A general workflow and data flow in the system will now be described with reference to Figs. 7 and 8.

When electronic data to be indexed becomes available, a data management part (management server) of the system automatically acquires the data to be indexed from the database or storage part in which the data is stored (step S71). The acquisition can entail the management server transmitting a data request, and receiving a data transfer in response to the request. The data transfer can entail an electronic data at a time, or more typically a number of electronic data that can be accommodated within a data packet transmitted from the database or storage part to the management server.

After the transferred electronic data is received by the management server, the management server proceeds to index the received data (step S73), that is, generate metadata based on properties of the data, without user input. The metadata is stored by the data management part (step S75). Steps S71-S75 are iteratively performed until all of the electronic data stored in the databases or storage parts have been indexed.

During the course of data acquisition and indexing, a copy of the original data is temporarily stored for the purpose of analyzing the data and generating metadata, and the copy of the original data is deleted after corresponding metadata has been generated. Since the quantity of metadata stored by the data management part for a specific set of electronic data is generally much less than the data quantity of the set itself, the volume of data stored by the management server can be greatly reduced.

After metadata has been generated through the indexing, a user, via a user interface (such as supplied via a browser or client software on the user terminal), can specify retrieval criteria (step S75). The data management part compares the specified criteria (typically, specified values, or ranges of values, of selected or specified properties) to the stored metadata to determine electronic documents or data that satisfy the specified criteria, and returns a list of such documents or data via the user interface to the user for review. The list preferably includes links, with associated URL (uniform resource locator), to the documents or data. Thus, the user can click on a link to request the corresponding original data.

In response to user selection, a request for the selected document or data (that is, the original data stored in the databases or storage parts) is transmitted to the database or storage part storing the selected document or data, and the database or storage part in turn transfers the requested document or data to the user terminal and via one or more storage or transmission media (step S77). Incidentally, as an optional feature, the management server can update usage history represented in the metadata associated with the requested document or data to reflect the request from, or transfer of the document or data to, the user terminal.

After the transferred document or data is received at the user terminal, the document or data can be output via a display or a printer (step S79).

An example of a method performed by the management server for indexing the electronic document or data is explained below with reference to Fig. 9.

When the electronic document or data is acquired, a copy of the original data is stored temporarily in order to allow indexing to be performed (step S91). In step S92, it is determined whether metadata for the electronic data has already been stored in the index management table. If metadata for the electronic data has already been stored in the index management table (step S92, Y), the server proceeds to step S98 and skips steps S93-S97 for the particular data.

On the other hand, if metadata for the electronic data has not already been stored in the index management table (step S92, N), the stored copy of the original data is processed for indexing according to data type (step S93). Such processing will be described with reference to Fig. 10.

First, the server determines the data type of the particular electronic data and stores metadata indicating the data type in the index management table for the particular data (step S101).

If the particular data corresponds to image-type data (step S101, image), a character recognition part of the server performs character recognition on the data (step S102) and recognized characters are stored as metadata in the index management table for the particular data, along with metadata corresponding to index items indicated in the index table to correspond to image-type properties (step S103).

If the particular data corresponds to data type of electronic document (step S101, electronic document), such as a file generated by application such as Word, PowerPoint, Excel, Acrobat, etc., file properties corresponding to index items associated with electronic documents are extracted from the document data and stored as metadata in the index management table for the electronic document (step S104).

If the particular data corresponds to data type of e-mail (step S101, e-mail), header and body data of e-mail are extracted from the e-mail and stored as metadata in the index management table for the e-mail data (step S105).

If the particular data corresponds to data type of voice (step S101, voice), date of call, caller ID and receiver ID properties are extracted from the voice data and stored as metadata in the index management table for the e-mail data (step S106). Additional properties such as caller name, receiver name, etc., if available, are extracted and stored as metadata as well.

Back to the method of Fig. 9, the server determines whether for each additional index item not yet considered, the particular data includes properties corresponding to such additional index item (step S94). If the particular data includes properties corresponding to the additional index item (step S94, Y), the server generates metadata corresponding to the additional index item and stores it in the index management table for the electronic data (step S95). On the other hand, if the electronic data does not include any properties corresponding to the additional index item (step S94, N), the server determines whether there is another index item that has not yet been considered with respect to the particular electronic data (step S96). If there is another index item (step S95, Y), steps S94-S96 are repeated.

If all index items have been considered with respect to the particular electronic data (step S96, N), location information indicating where the original data is stored in the database or storage part is stored in the index management table for the particular electronic data (step S97).

In step S98, the server deletes the copy data. Next, the server checks whether additional electronic data is available to be acquired (step S99). If additional electronic data is available to be acquired (step S99, Y), the server returns to step S91 and the process of steps S91-S99 is performed for the additional data.

In the example of Fig. 9, the server deletes the copy data in step S98 and then checks in step S99 whether additional electronic data is available to be acquired. On the other hand, in another example, the server checks whether additional electronic data is available to be acquired, and deletes copy data only when no additional electronic data is available to be acquired.

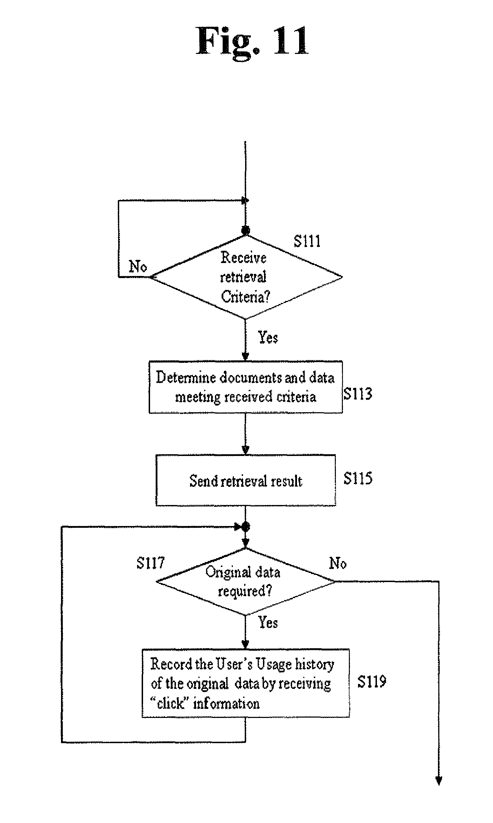

A method for the management server to process requests to retrieve stored documents or data will now be discussed with reference to Fig. 11.

When the server is not occupied with indexing data (or even when the server is in the middle of indexing data), the server is repeatedly monitoring for retrieval requests (step S111). When retrieval criteria are received (step S111, Yes), the server proceeds to process the retrieval criteria and compare the specified criteria to the metadata in the index management table to determine electronic documents or data that satisfy the specified criteria (step S113). Next, the server returns to the requesting terminal the results of the comparison identifying such documents or data that meet the specified criteria (step S115). The results preferably are presented to the user in a user interface that allows the user to retrieve the original data of (for example, by clicking on a link supplied in the user interface to) one of the electronic documents or data identified in the results. The request of the original data of the selected electronic document or data may be supplied directly to the database or storage part storing the original data, or the request may be relayed through the server. In either instance, the server monitors such clicking or retrieval action (step S117). If the user does not select any of the results for retrieval, then the server takes no additional action in connection with the received retrieval criteria (step S117, No). On the other hand, if the user retrieves the original data of a selected electronic document or data (step S117, Yes), the server updates the usage history metadata of the electronic document or data to reflect such access (step S119).

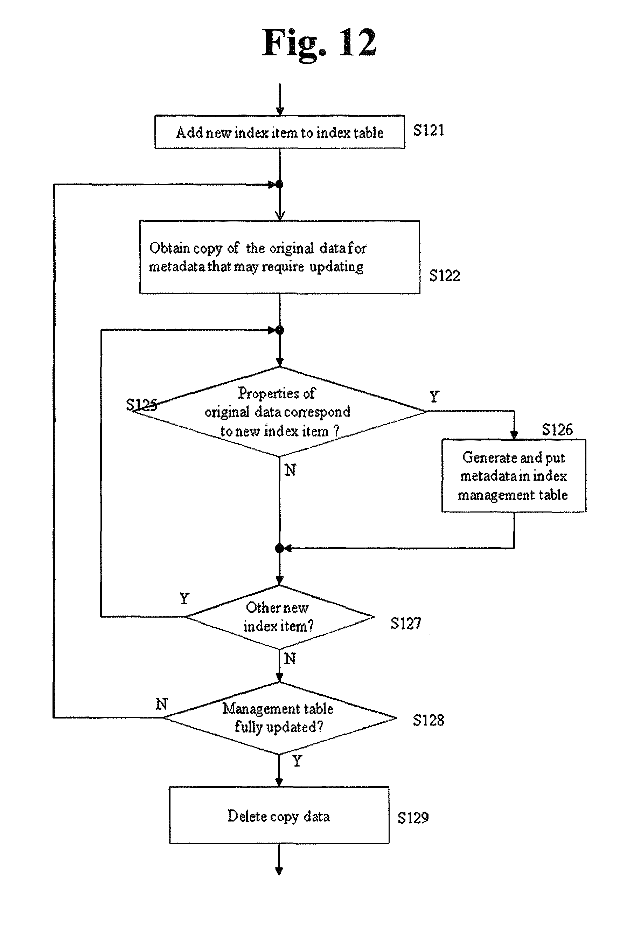

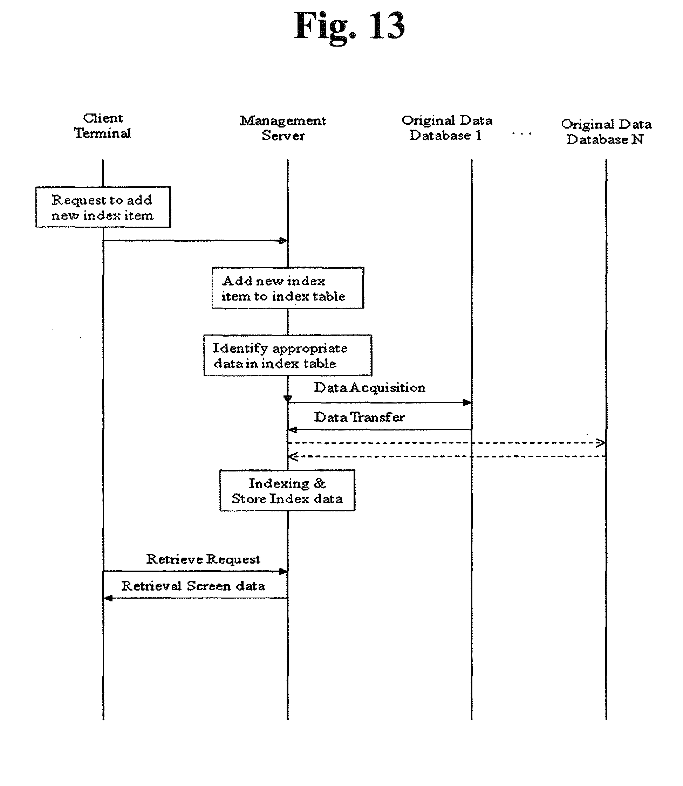

A process for adding a new index item, in an exemplary embodiment of this disclosure, will now be discussed with reference to Figs. 12 and 13.

As mentioned hereinabove, new index item(s) can be added either automatically or manually in the system (step S121). For example, a new index item can be added based on request from a user terminal. After a new index item is added, the management server determines the metadata stored in the index management table that may require updating based on the added new index item. For each electronic document or data having such metadata stored in the index management table, the server identifies the location metadata stored in the index management table for the electronic document, transmits an acquisition request to access the location, acquires the original data for the electronic document by data transfer from the database or storage part storing the original data, and makes a copy of the original data (step S122). The server determines whether the electronic document or data has the properties corresponding to the new index item (step S125). If the electronic document or data has the properties corresponding to the new index item (step S125, Y), the server generates metadata based on such properties associated with the new index item and stores the metadata in the index management table (step S126).

In any event, the server then checks whether there is an additional new index item (step S127). If there is an additional new index item (step S127, Y), the server repeats steps S125-S127 with respect to the additional new index item.

On the other hand, if there is no additional new index item (step S127, N), the server checks whether metadata stored in the index management table for another electronic document or data requires updating with regard to the new index item(s) (step S128). If there is metadata stored in the index management table for another electronic document or data that requires updating with regard to the new index item(s) (step S128, Y), steps S122-S128 are repeated for such other electronic document or data. On the other hand, if there no other electronic document or data that requires updating with regard to the new index item(s) (step S128, N), all of the stored copy data are deleted (step S129).

After the index management table has been updated for the new index item(s), when a retrieval request is received, the server will process the retrieval request, as discussed in connection with Figs. 7, 8 and 11, and the retrieval results will be generated based on the updated management index table.

In the example of Figs. 12 and 13, the server deletes all of the stored copy data at the end of the updating process, that is, only when no additional electronic document data for which updating of metadata is needed. On the other hand, in another example, the copy data for an electronic document or data is deleted after updating of metadata for the electronic document or data is completed, and then the server checks whether an additional electronic document or data for which metadata updating may be needed.

Fig. 1a shows schematically operations of a system for managing electronic documents and data, in an example of this disclosure.

System 10 includes a user terminal 16, an agent or monitor part 17, and a database management part 18 and database (or storage part) 19, all of which are interconnected by a network 15 (typically, a secure intranet or extranet). In addition, the user terminal 16, as well as other components connected to the network 15, can access the Internet, with a firewall 14 provided between the network 15 and the Internet. Thus, the user terminal 16 can communicate with management service 13 through the Internet.

While the example shown in Fig. 1a includes one terminal (15) and one database (19), it should be appreciated that such numbers of terminals and databases are arbitrary and are selected as an example in order to facilitate discussion, and that the subject matter of this disclosure can be implemented in a system including one or more terminals and one or more databases or data storage parts. Further, it is noted that a terminal and a database or data storage part can be included in one integrated device (or of course can be separate devices).

The database 19 can comprise one or more structural or functional parts that have or support a storage function. For example, the database 19 can be, or can be a component of, a source of electronic data, such as an e-mail server, a file server, a multi-function peripheral device (MFP or MFD), a voice data server, an application server, etc. It should be appreciated that the term "electronic document" or "electronic data", as used herein, in its broadest sense, can comprise any data that a user may wish to access, retrieve, review, etc.

As mentioned above, a plurality of databases may be included in the system, and each database can store a corresponding type of data (for example, one database stores image data, another database stores electronic documents, and a third database stores voice data, etc.) or multiple types of data (for example, one database stores image data and e-mail data, another database stores electronic documents and application files, and a third database stores voice data, audio data, video data, multimedia files, etc.), with the type(s) of data stored in one database being mutually exclusive from, or alternatively overlapping with, the type(s) of data stored in another database. Further, the plurality of databases can be distinct parts (for example, resident in respective servers or multi-function devices), each connected to the network 15, or they may be resident in one device, such as a multi-function device wherein one database stores image data from scan operations in the multi-function device, another database stores image data from print operations in the multi-function device, a third database stores image data from facsimile operations in the multi-function device, etc. In any event, the management service 13 tracks and monitors the various types of data that are stored in the databases.

The management service 13 can be configured on a web server or on a backend server connected to the web server, to provide a user interface through the Internet to a user terminal through which a user can enter user credential information, as well as other information. The management service performs user authentication by using the user credential information. Once the user credential information has been authenticated, the web service proceeds to make its services available to the user terminal.

The management service 13 tracks the electronic documents in the document database 19, and maintains searchable metadata corresponding to properties of the electronic documents stored in the document database. The metadata maintained by the management service for a document stored in the document database can include properties information (for example, author, creation date, data type, document contents information, etc.) as well as a pointer to the physical address of the document.

The monitor or agent 17 monitors access to the document database, including all file events (for example, read, edit, insert, delete, etc.), and transmits access event metadata to the management service 13. When a file event occurs, the monitor or agent 17 captures the metadata of such event, and transmits it along with a hyperlink to the file that has been accessed. The metadata maintained by the management service is updated based on the access event metadata.

The monitor or agent 17 is shown in Fig. 1a as a separate component connected to the network 15. However, it should be appreciated that monitor or agent 17 is typically software running on one of the hardware components connected to network 15, such as the user terminal 16, the computer bearing the database management part 18 and/or database 19, another computer in the system, etc.

The user terminal 16 configured with software (for example, a browser) allowing the user terminal to communicate through the Internet with the management service can receive a user interface from the management service through which a user can enter user credential information (which may or may not be stored locally). After the user credential information has been authenticated, the user terminal 16 communicating with the management service 13 through the Internet can transmit a document retrieval request to the management service.

The document request part of the user terminal in the preferred embodiment in which the management service is a web service is a software configuration of a user interface for the user to enter user credential information (for example, user name, password, etc.) and specify a document or data requested to be retrieved. Alternatively, the document request part in another exemplary embodiment in which the management service is provided through another type of connection, such as a peer-to-peer connection, may be native software on the terminal.

When the management service receives a document retrieval request from a user terminal, the management service, in response to the document retrieval request, transmits an authorization key and a pointer indicating a physical address in the database 19 of the requested document. For example, the requested document can be a file in a storage device in the intranet (as noted above, the collection of electronic documents or data in the system can be distributed amongst a plurality of database or storage parts) and the pointer can include a hyperlink for accessing the file.

The user terminal 16 is further configured through software (an authorization processing part) to receive or intercept an authorization key and pointer from the management service 13, and automatically transmit a request to retrieve the requested document to the database management part 18. The request includes user authentication information, the pointer and the authorization key. Without such authorization key, the user terminal would not be permitted to obtain the requested document from the document database, even when the user terminal has the pointer to the requested document. On the other hand, the authorization key is generated for the specific user, and would not allow access to the requested document from the document database, unless user authentication information is supplied along with the authorization key to the document database.

When the database management part 18 receives a request to retrieve electronic documents and/or data in database 19, the database management part compares the user authentication information and the authorization key with access credentials associated with the requested document. In order to ensure secure access of the electronic documents and/or data in database 19, each document or data is associated with corresponding access credentials, and access to the document or data is allowed only when user authentication information and the authorization key match the access credentials associated with the requested document. If the request to retrieve the requested document is authenticated based on the comparison, the database management part 18 retrieves from the document database the requested document indicated by the pointer and transmits the retrieved document to the terminal 16.

On the other hand, in some instances, the user cannot identify the particular document that is desired. In such instance, the user can log-in to the management service and query the metadata maintained by the management service or otherwise submit a search request. The management service can supply a user interface to the user terminal for user entry of the search request. When the management service receives the search request, and assuming that user credential information from the user terminal has been authenticated, the management service searches, based on the search request, the metadata maintained for the electronic documents stored in the document database and transmits search results to the user terminal. The user using the search results user interface can select one or more documents from the search results, and a document retrieval request is formed based on the selection of the one or more documents from the search results.

The management service processes the document retrieval request based on the user selection of the one or more documents from the search results, and generates the authorization key for accessing the selected document and generates the pointer based on a hyperlink maintained in the metadata for the selected document.

Fig. 2a shows an exemplary constitution of a server that can be configured through software to provide management service 13. As shown in Fig. 2a, server 20 includes a controller (or central processing unit) 21 that communicates with a number of other components, including memory or storage part 22, network interface 23, keyboard 26 and display 27, by way of a system bus 29.

The server may be a special-purpose device (such as including one or more application specific integrated circuits or an appropriate network of conventional component circuits) or it may be software-configured on a conventional personal computer or computer workstation with sufficient memory, processing and communication capabilities to operate as a server and/or web server, as will be appreciated to those skilled in the relevant arts.

In server 20, controller 21, memory/storage 22, network interface 23, keyboard 26 and display 27 are conventional, and therefore in order to avoid occluding the inventive aspects of this disclosure, such conventional aspects will not be discussed in detail herein.

The controller 21 executing program code instructions controls server operations, including maintaining metadata, such as in an index table. Fig. 5a shows an example of an index table. Data type and location of data are index items common to each type of data. In the example of Fig. 5a, the index items for image data are author, receiver ID (such as network address of device from which data was received), type of operation (print, copy, fax, scan, etc.), date of operation and name of user who performed the operation, the index items for voice data are date of call, caller name, caller ID (that is, telephone number), receiver name and receiver ID, and the index items for electronic documents are title or name of file, date created, date last saved, author, last saved by and company.

It should be apparent that metadata maintained by the management service is not limited to the index items shown in Fig. 5a which merely present an example. Further, although metadata can be maintained in the form of an index table in the example of Fig. 5a, it should be apparent to those skilled in the art that the metadata can be organized in any of various manners that do not involve a table. For example, such metadata or index data can be organized as data objects through object-oriented programming, and/or via linked lists, data linking, a dynamic or relational database, etc.

As mentioned above, the management service 13 tracks and monitors the various types of data that are stored in the database 19. For each specific electronic data, the management service 13 determines the data type of the specific electronic data, uses the index table to determine appropriate index items for the specific electronic data, and generates and maintains metadata corresponding to such appropriate index items for the specific electronic data.

As an example, metadata maintained for specific electronic image data can indicate an operation (e.g., print, facsimile, scan, etc.) last performed in connection with the specific electronic image data. In another example, the management service includes in metadata maintained for specific electronic mail data a copy of header and body data of the specific electronic mail data. As another example, the management service includes in metadata maintained for specific electronic voice data date, caller identification and receiver identification of the specific electronic voice data.

Maintenance and updates of metadata is also discussed in co-pending application no. 12/112,709, filed April 30, 2008 and entitled "MANAGING ELECTRONIC DATA WITH INDEX DATA CORRESPONDING TO SAID ELECTRONIC DATA", the entire contents of which are incorporated herein by reference.

In the example shown in Fig. 2a, the management service 20 includes the network interface 23 for communications through a network, such as communications through the Internet with the terminal 16, database management part 18 and/or database 19 in Fig. 1a. However, it should be appreciated that the subject matter of this disclosure is not limited to such configuration. For example, the management service may communicate with the database through direct connections and/or through a network to which the user terminal is not connected. As another example, the management service need not be provided by a server that services client terminals, but rather may communicate with the terminal on a peer basis, or in another fashion.

The network 15 is preferably a secure intranet or extranet but can include one or more of a local area network, a wide area network , any type of network that allows secure access, etc., or a combination thereof. Further, other secure communications links (such as a virtual private network, a wireless link, etc.) may be used as well in the network 15. In addition, the network 15 preferably uses TCP/IP (Transmission Control Protocol/Internet Protocol), but other protocols can also be used. How devices can connect to and communicate over the network 15 is well-known in the art and is discussed for example, in "How Networks Work", by Frank J. Derfler, Jr. and Les Freed (Que Corporation 2000) and "How Computers Work", by Ron White, (Que Corporation 1999), the entire contents of each of which are incorporated herein by reference. terminal on a peer basis, or in another fashion.

The user terminal 16 can be any computing device, including but not limited to a personal, notebook or workstation computer, a kiosk, a PDA (personal digital assistant), a mobile phone or handset, another information terminal, etc., that can communicate through the network 15 with other devices. Although only one user terminal is shown in Fig. 1a, it should be understood that the system 10 can include a plurality of user terminal devices (which can have similar or different configurations).

The terminal 16 can interact (exchange data) with the management service 13 via the network 15, so as to benefit from the services provided by the server. For example, a document retrieval request can be sent from the terminal 16 to the management service 13. As another example, the terminal 16 can transmit other information as well, such as, for example, user identification, password, the name of the person operating the terminal, etc.

An example of a configuration of the user terminal (for example, as a computer) is shown schematically in Fig. 3a. In Fig. 3a, computer 30 includes a controller (or central processing unit) 31 that communicates with a number of other components, including memory 32, display 33, keyboard (and/or keypad) 34, other input/output (such as mouse, touchpad, stylus, microphone and/or speaker with voice/speech interface and/or recognition software, etc.) 35, network interface 36 and print driver 37, by way of internal bus 39.

The memory 32 can provide storage for program and data, and may include a combination of assorted conventional storage devices such as buffers, registers and memories [for example, read-only memory (ROM), programmable ROM (PROM), erasable PROM (EPROM), electrically erasable PROM (EEPROM), static random access memory (SRAM), dynamic random access memory (DRAM), nonvolatile random access memory (NOVRAM), etc.].

The network interface 36 provides a connection (for example, by way of an Ethernet connection or other network connection which supports any desired network protocol such as, but not limited to TCP/IP, IPX, IPX/SPX, or NetBEUI) to network 15.

A user interface is provided and is configured through software natively or received through a network connection, to allow the user to access electronic data or content on the terminal and/or via the network, interact with network-connected devices and services, enjoy other software-driven functionalities, etc. For example, a browser (such as Internet Explorer™, Netscape Navigator™, a proprietary browser, etc.) may be provided on the terminal so that a user of the terminal can use browsing operations to communicate with the management service 13 and/or access other data or content.

Additional aspects or components of the computer 30 are conventional (unless otherwise discussed herein), and in the interest of clarity and brevity are not discussed in detail herein. Such aspects and components are discussed, for example, in "How Computers Work", by Ron White (Que Corporation 1999), and "How Networks Work", by Frank J. Derfler, Jr. and Les Freed (Que Corporation 2000), the entire contents of each of which are incorporated herein by reference.

As mentioned above, the user terminal 16 is not limited to a personal computer, but can be manifested in a form of any of various devices that can be configured to communicate over a network and/or the Internet.

Fig. 4a shows an example of a multi-function device (MFD) or multi-functional peripheral device (MFP) which includes scanning and printing functions, and additionally can serve as a user terminal for entering, saving and accessing electronic data or documents. In addition, a MFP can include a resident database. Although the user terminal 16, database management part 18 and the database 19 are shown in Fig. 1a as distinct components, it should be understood that such components can be resident within a MFP device.

MFP apparatus 40 shown in Fig. 4a includes a controller 41, and various elements connected to the controller 41 by an internal bus 49. The controller 41 controls and monitors operations of the MFP 40. The elements connected to the controller 41 include storage 42 (for example, random access memory, read-only memory, hard disk drive, portable storage media drive such as for optical discs, magnetic discs, magneto-optical discs, etc., semiconductor memory cards, combinations of storage media, etc.), printer engine 43, scanner engine 44, network interface (I/F) 45, converter 47 for converting data from one format to another format (for example, a format suitable for printing, faxing, e-mailing, etc.), and user interface 48. The controller 41 also utilizes information stored in user management table 46 to authenticate the user and control user access to the functionalities of the MFP.

Storage 42 can include one or more storage parts or devices, and program code instructions can be stored in one or more parts or devices of storage 42 and executed by the controller 41 to carry out the instructions. Such instructions can include instructions for performing specified functions (such as printing, scanning, faxing, copying, e-mailing, etc.) of the MFP, to enable the MFP to interact with a terminal and/or the management service (for example, 13, 20, etc.), as well as perhaps other external devices, through the network interface 45, and to control the converter 47, access data in the user management table 46, and interactions with users through the user interface 48.

The user interface 48 includes one or more display screens that display, under control of controller 41, information allowing the user of the MFP 40 to interact with the MFP. The display screen can be any of various conventional displays (such as a liquid crystal display, a plasma display device, a cathode ray tube display, etc.), but preferably is equipped with a touch sensitive display (for example, liquid crystal display) and is configured to provide a GUI (graphical user interface) based on information input by an operator of the MFP, so as to allow the operator to interact conveniently with services provided on the MFD, or with the MFD serving as terminal for accessing electronic data or other content through the network. For example, a browser (such as Internet Explorer™, Netscape Navigator™, a proprietary browser, etc.) may be provided on the MFD so that the operator can use browsing operations to access the database 19 in system 10. As another example, the operator can scan a document, and use the browser to upload the image data from scanning of the document (and specify additional information associated with the image) to the database 19.

The display screen does not need to be integral with, or embedded in, a housing of the MFP, but may simply be coupled to the MFP by either a wire or a wireless connection. The user interface 48 may include keys and/or buttons (such as graphical keys or buttons, or other graphical elements, of a GUI on a touchscreen display) for inputting information or requesting various operations. Alternatively, the user interface 48 and the display screen may be operated by a keyboard, a mouse, a remote control, voice recognition, or eye-movement tracking, or a combination thereof.

Since the MFP 40 is typically shared by a number of users, and is typically stationed in a common area, the MFP preferably prompts the user to supply user credential or authentication information, such as user name (or other user or group information), password, access code, etc. The user credential or authentication information can be compared to data stored in the user management table 46 to confirm that the user is authorized to use the MFP. The user credential or authentication information may also be stored for the session and automatically supplied if access to other devices through the network requires it. On the other hand, such other devices may prompt the user to supply other user credential or authentication information through the user interface.

Other methods of authentication may also be used. For example, the multi-function device may be equipped with a card reader or one or more biometrics means (such as comparing fingerprints, palm prints, voice or speech, retinas or irises, facial expressions or features, signature, etc.).

Printer engine 43, scanner engine 44 and network interface 45 (similar to interface 23 in Fig. 2a and interface 36 in Fig. 3a) are otherwise conventional, and therefore, a detailed description of such conventional aspects are omitted in the interest of clarity and brevity (so as not to mask the novel aspects of the subject matter of this disclosure).

The MFD 40 can have any or all of the functions of similar devices conventionally known, such as for scanning, editing and storing images, sending a fax, sending and receiving e-mails with or without attachments, accessing files by FTP or another protocol or facility, surfing the Web, etc. Further, multi-functional devices or multi-function peripheral devices can play a prominent role to convert hardcopy documents to electronic documents.

Another exemplary embodiment is described infra with reference to Fig. 6a which illustrates an example of a work flow in the exemplary embodiment.

In the example of Fig. 6a, the user operates a browser on a user terminal to connect with the management service via the web and performs login (S61). After the user is authenticated, the management service provides a user interface to the user via the browser to enable the user to submit a document retrieval request (S62). Based on the document retrieval request, the management service searches the metadata maintained by the management service and retrieves a pointer to a requested document (S63). As mentioned above, the metadata maintained by the management service for a document stored in the document database can include properties information, such as author, creation date, data type, document contents information, etc., as well as a pointer to the physical address of the document.

Further, the management service generates an authorization key and transmits the key along with the pointer to the user terminal (S64). On the terminal side, an agent, on the user terminal or elsewhere in the intranet, intercepts the authorization key and the pointer, and transmits them to the database management part and document database (S65). The database management part compares the authorization key and the user's login data (obtained from, for example, the agent, the user terminal, a network directory, such as an Active Directory, etc.) with access credentials for the document to determine whether access by the user to the requested document is approved (S66). If access is approved (S67, Yes), the requested document is retrieved from the document database and transmitted to the user terminal (S68). On the other hand, if access through the access credential is not approved (S67, No), an error message indicating denial of access is transmitted to the user terminal (S69).

A data flow in another exemplary embodiment will now be described with reference to Fig. 7a.

The user logs-in through the web with the management service via HTTPS (or another secure connection), including entering user name and password (S71). The management service verifies the user's credential and approves access (S72). Next, the user utilizes a user interface provided by the management service through the web connection to input a search request (S73).

Based on the search request, the management service queries the metadata maintained by the management service and returns a list of search results (S74). The user reviews the search results and requests retrieval of one or more documents (S75). In response to the retrieval request, the management service returns to the user terminal an authorization key (since authentication has been established for this session) together with the physical pointer of the document location at the intranet side (S76).

After the authorization key and pointer are received on the terminal side, the user submits a request to retrieve the requested document accompanied with the authorization key and pointer and user login data to the database management part (for example, file server) and document database (S77). The database management part authenticates the user login data and the authorization key and then retrieves the requested document using the physical pointer, and returns the retrieved document to the user (S78).

An example of a work flow on the user terminal side is described infra with reference to Figs. 8Aa and 8Ba.

The user logs-in to the management service via the web, by operating the browser of the terminal (S80). If access to the management service is not granted (S81, No), it is determined whether the user is to be permitted to retry login (for example, different username, password, etc.) [S82]. If the user is not allowed to retry (S82, No), the process may terminate or a message may be displayed to indicate that access to the management service has been denied (not shown). If retry is permitted (S82, Yes), the process returns to login (S80).

After access has been granted (S81, Yes), the terminal receives user interface data for a search screen from the management service (S83), and the terminal displays the search screen (S84). It is monitored at the terminal side whether the user has set retrieval criteria (S85). If retrieval criteria has been set (S85, Yes), the retrieval criteria is sent to the management service (S86).

It is monitored at the terminal side whether results of the search has been received (S87). If search results have been received (S87, Yes), it is determined whether the search criteria matched any document or data, that is, whether there are any documents or data listed in the results (S88). If there are no matches (S88, No), the user interface allows the user to specify that he or she would like to search again (S89). If the user would like to search again (S89, Yes), the search screen is displayed again (S84). If the user does not wish to search again (S89, No), the process terminates.

If the search results indicate one or more matches (S88, Yes), it is monitored whether any of the documents or data are selected by the user (S180). If no documents or data have been selected after a timeout period (S180, No), it is determined whether the process should terminate (S182). For example, a user interface screen may be displayed to ask the user to choose whether to end the process or whether the user needs more time (not shown). If it is determined that the process should terminate (S181, Yes), the process ends. On the other hand, if it is determined that the process should not terminate (S181, No), monitoring for user selection of one of the documents displayed in the results continues (S180).

After one of the documents displayed in the results is selected (S180, Yes), a document retrieval request corresponding to the selected document is transmitted to the management service (S182). After the document retrieval request is transmitted, it is monitored at the terminal side whether an authorization key and pointer have been received (S183). After the authorization key and pointer have been received (S183, Yes), a request for the requested document along with the authorization key and pointer is transmitted from the terminal to the database or database management part (S184). Thereafter, it is monitored at the terminal whether the requested document has been received (S185).

After the requested document has been received (S185, Yes), the requested document, or a message indicating that the document has been received, is displayed, and it is determined whether there are remaining documents or data in the search results that have not been selected (S186). If there are not unselected documents or data in the search results (S186, No), the process ends. On the other hand, if there are unselected documents or data in the search results (S186, No), the search results screen may be displayed once again (S180).

An example of a retrieval process on the management service side is described infra with reference to Fig. 9a.

The management service monitors for a request to login (S90). After a login request is not received (S90, Yes), authentication is performed (S91), and the result of the authentication process is transmitted to the user terminal (S82, No).

User interface data for a search screen is transmitted to the user terminal, it is monitored at the management service side whether retrieval criteria has been received (S93). If retrieval criteria has been received (S93, Yes), metadata is queried based on the retrieval criteria (S94), and then the retrieval result is transmitted to the user terminal (S95).

After the retrieval result is transmitted, it is monitored at the management service side whether a document retrieval request has been received (S96). If a document retrieval request has been received (S96, Yes), an authorization key specific to the user is generated and transmitted along with pointer to the requested document to the user terminal (S97), and then the process returns to monitoring for another document retrieval request (S96). If a document retrieval request has not been received within a timeout period (S96, No), the process ends.

A process performed at the document database side will now be described with reference to Fig. 10a.

The database management part monitors for document requests (S101). After a document request is detected (S101, Yes), the authorization key, received with the request, and user credentials associated with the user requesting the document are compared to access credentials (that is, access to a document is typically limited) associated with the requested document (S103). As mentioned above, the user credentials may be received along with the request, may be obtained from another source such as a network directory, etc. If the credentials are satisfactory (S103, Yes), the requested document indicated by the pointer accompanying the request is retrieved and transmitted to the user terminal (S104). On the other hand, if the credentials are not satisfactory, an error message is transmitted to the user terminal, with or without explanation of why the credentials are unsatisfactory.

The above-mentioned data management methodologies, apparatuses and systems may be one or more computer programs which are executable by a computer and tangibly embodied in a program storage medium (such as optical disks, magneto-optical disks, floppy diskettes, ROMs, RAMs, EPROMs, EEPROMs, FLASH memory, any type of media suitable for storing electronic instructions, etc.) readable by a computer. The program(s) may include a plurality of parts, executions of which may be distributed over a plurality of computers, terminals or other electronic devices which communicate with each other over a network or other transmission media.

The above-mentioned embodiments and examples are illustrative, and many variations can be introduced on these embodiments without departing from the spirit of the disclosure or from the scope of the appended claims. For example, elements and/or features of different illustrative embodiments may be combined with each other and/or substituted for each other within the scope of this disclosure and appended claims.

## Claims

1. An apparatus for managing electronic data stored in one or more data storage parts, said apparatus comprising:
an index information storage part (19) configured to store index information indicating a plurality of index items and indicating for each specific type of electronic data a corresponding subset of said index items associated with, and relevant to, the specific type of electronic data; and
a data management part (13) configured to maintain said index information stored in said index information storage part, and generate and maintain for each specific electronic data, metadata corresponding to each specific index item indicated in the index information as being associated with and relevant to the data type of the specific electronic data,
wherein each metadata for a particular electronic data is in accord with a corresponding data property of the particular electronic data.

2. The apparatus as claimed in claim 1, wherein when an additional index item is added to said index information for a data type, said data management part generates, for each particular electronic data of the data type, additional metadata corresponding to the additional index item and for the particular electronic data.

3. The apparatus as claimed in claim 1, wherein when an additional index item is added to said index information, said data management part determines for each particular electronic data stored in said one or more data storage parts whether the particular electronic data includes a data property that corresponds to the additional index item, and if the particular electronic data includes said data property, said data management part generates, for the particular electronic data, additional metadata that corresponds to the additional index item.

4. The apparatus as claimed in claim 1, further comprising:
a data type recognition part configured to determine a data type of additional electronic data,
wherein said data management part generates for the additional electronic data additional metadata corresponding to the index items indicated by the index information as being associated with the data type of the additional electronic data.

5. The apparatus as claimed in claim 1, wherein said data management part monitors access to each specific electronic data, and maintains usage history metadata indicating the specific accesses to the specific electronic data.

6. The apparatus as claimed in claim 5, wherein said usage history metadata maintained by said data management part for the specific electronic data indicates for at least a last access of the specific electronic data, identification of a user who accessed the specific electronic data and time and date of said last access.

7. The apparatus as claimed in claim 5, wherein said usage history metadata maintained by said data management part for the specific electronic data indicates for a transmission of the specific electronic data, a destination to which the specific electronic data was transmitted.

8. The apparatus as claimed in claim 1, wherein said data management part includes in the metadata maintained for specific electronic image data stored in said data storage part, indication of one of print, facsimile and scan operations last performed to the specific electronic image data.

9. The apparatus as claimed in claim 1, wherein said data management part includes in the metadata maintained for specific electronic voice data stored in said data storage part, date, caller identification and receiver identification of the specific electronic voice data.

10. The apparatus as claimed in claim 1, wherein said data management part is configured to receive, from a user terminal via a network, a retrieval request including criteria for determining requested data, generate retrieval results by comparing said retrieval criteria to said metadata, and for each of the retrieval results, send to the user terminal retrieval information based on a location of original data specified by the retrieval result.

11. A system for managing electronic data utilizing index data, said system comprising:
a data storage part configured to store electronic data of one or more data types;
a user terminal coupled to a network;
an index information storage part configured to store index information indicating a plurality of index items and indicating for each specific type of said electronic data stored in said data storage part, a corresponding subset of said index items associated with, and relevant to, the specific type of electronic data; and
a data management part configured to maintain said index information in said index information storage part, generate and maintain for each specific electronic data metadata corresponding to each specific index item indicated in the index information for the type of the specific electronic data, receive from said user terminal a retrieval request indicating a retrieval criteria, generate retrieval results by comparing said retrieval criteria to said metadata, and for each of the retrieval results, and send to the user terminal retrieval information based on a location of original data specified by the retrieval result.

12. The system as claimed in claim 11, wherein when an additional index item is added to said index information for at least one data type, said data management part generates, for each electronic data of a data type included in said at least one data type and stored in said data storage part, additional metadata corresponding to the additional index item and for the electronic data.

13. The system as claimed in claim 11, further comprising a data type recognition part configured to determine a data type of additional electronic data, wherein said data management part generates for the additional electronic data additional metadata for the index items indicated by the index information to correspond to the data type determined by said data type recognition part.

14. The system as claimed in claim 11, wherein said data management part is configured to monitor selection from said data terminal of specific electronic data from said retrieval results sent to the data terminal, and record the selection in usage history metadata maintained by said data management part for the specific electronic data.

15. The system as claimed in claim 11, further comprising:
an image character recognition part configured to recognize characters in an electronic image,
wherein said data management part includes in the metadata maintained for electronic image data stored in the data storage part, the recognized characters of the specific electronic image data.

16. A method for managing electronic data utilizing index data, said method comprising the steps of:
(a) maintaining index information indicating a plurality of index items and indicating for each specific type of electronic data a corresponding subset of said index items corresponding to the specific type of electronic data;
(b) determining a data type of specific electronic data; and
(c) generating and maintaining for the specific electronic data, metadata corresponding to each specific index item indicated in the index information for the data type, determined in step (b), of the specific electronic data.

17. The method as claimed in claim 16, further comprising:
adding an additional index item to said index information for at least one data type; and
generating for each electronic data of a data type included in said at least one data type, additional metadata corresponding to the additional index item.

18. The method as claimed in claim 16, further comprising:
inserting in the metadata maintained for specific electronic image data, indication of one of print, facsimile and scan operations last performed to the specific electronic image data; and
inserting in the metadata maintained for specific electronic voice data, date, caller identification and receiver identification of the specific electronic voice data.

19. The method as claimed in claim 16, further comprising:
receiving from a data terminal, a retrieval request including criteria for determining requested data; and
sending to the data terminal results corresponding to the retrieval request;
monitoring selection from the data terminal of specific electronic data from said results sent to the data terminal; and
recording the selection in usage history metadata maintained for the specific electronic data.

20. The method as claimed in claim 16, further comprising:
maintaining in the metadata for specific electronic data, indication of a source of the specific electronic data.

21. An apparatus for secure access of electronic data corresponding to electronic documents in a document database, said apparatus comprising:
a document request part configured to transmit user credential information and transmit a document retrieval request through a network to a management service; and
an authorization processing part configured to receive from said management service, if said user credential information is authenticated by said management service, an authorization key and a pointer indicating a physical address of a requested document in said document database, and automatically transmit to a database management part, user authentication information, said pointer, said authorization key and a specified request to retrieve the requested document,
wherein said database management part compares the user authentication information and the authorization key with access credentials associated with the requested document, and if the specified request to retrieve the requested document is authenticated based on the comparison, said database management part retrieves from said document database the requested document indicated by the pointer and transmits the retrieved document to said document request part.

22. The apparatus as claimed in claim 21, further comprising:
a data monitor part configured to monitor for access events of accesses of electronic documents in said document database, wherein when said data monitor part detects an access of a specific document in said document database, the data monitor part captures access event metadata corresponding to the access of the specific document and transmits the access event metadata through the network to the management service.

23. The apparatus as claimed in claim 22, wherein the access event metadata corresponding to the access of the specific document and transmitted by said data monitor part to the management service includes a hyperlink to the specific document.

24. The apparatus as claimed in claim 21, further comprising:
a user interface configured for user entry of the user credential information and for user entry of a search request,
wherein said document request part transmits the user credential information and the search request to the management service.

25. The apparatus as claimed in claim 24, wherein said document request part receives from the management service search results for the search request from the document request part, and forwards the search request results to the user interface for display to the user.

26. The apparatus as claimed in claim 25, wherein said document request part forms said document retrieval request, based on user selection of one or more documents in said search results through said user interface.

27. The apparatus as claimed in claim 24, wherein said user authentication information transmitted by said authorization processing part to said database management part is based on the user credential information received through the user interface.

28. The apparatus as claimed in claim 21, wherein said document request part outputs the retrieved document through a user interface.

29. The apparatus as claimed in claim 21, wherein said database management part allows access to the requested document only when the user authentication information and the authorization key match the access credentials associated with the requested document.

30. A system for secure access of electronic data, said system comprising:
a document database and a database management part (19, 18) configured to process requests to retrieve electronic documents from said document database;
a management service (13) configured to receive user credential information and receive a document retrieval request through a network, perform user authentication by using the user credential information, and if said user credential information was authenticated, transmit, in response to said document retrieval request, an authorization key and a pointer indicating a physical address of a requested document in said document database;
a user terminal (16) including
a document request part configured to transmit said user credential information and said document retrieval request through said network to said management service, and
an authorization processing part configured to intercept said authorization key and said pointer from said management service, and automatically transmit to said database management part a specified request to retrieve the requested document, said specified request including user authentication information, said pointer and said authorization key,
wherein said database management part compares the user authentication information and the authorization key with access credentials associated with the requested document, and if the specified request to retrieve the requested document is authenticated based on the comparison, said database management part retrieves from said document database the requested document indicated by the pointer and transmits the retrieved document to said document request part.

31. The system as claimed in claim 30, wherein said management service maintains searchable metadata corresponding to properties of the electronic documents stored in said document database.

32. The system as claimed in claim 31, wherein the management service receives access event metadata corresponding to access of a specific document in said document database and updates, based on the access event metadata corresponding to the access of the specific document, a metadata record maintained for the specific document.

33. The system as claimed in claim 32, wherein the access event metadata corresponding to the access of the specific document includes a hyperlink to the specific document after the access.

34. The system as claimed in claim 31, wherein said user terminal is configured with a user interface for user entry of the user credential information and for user entry of a search request, and said document request part transmits the user credential information and the search request to the management service.

35. The system as claimed in claim 34, wherein when said management service receives the search request and the user credential information from said document request part, said management service performs user authentication and if said user credential information is authenticated, said management service searches, based on said search request, the metadata maintained for the electronic documents stored in said document database and transmits search results to the document request part.

36. The system as claimed in claim 35, wherein when said management service receives said document retrieval request, transmitted by said document request part based on user selection of one or more documents from said search results, said management service generates the authorization key for accessing the selected document and generates the pointer based on a hyperlink maintained in the metadata for the selected document.

37. A method for secure access of electronic data, said method comprising the steps of;
(a) maintaining searchable metadata for electronic documents in a document database, as a management service accessible from terminals through a network;
(b) receiving user credential information from a user terminal through said network and performing user authentication by using the user credential information from the user terminal;
(c) receiving a search request from the user terminal through said network, and if the user credential information is authenticated in (b), searching the metadata maintained for the electronic documents stored in the document database, based on the search request, and transmitting search results to the user terminal;
(d) receives a document retrieval request from the user terminal based on user selection of one or more documents from said search results, and if the user credential information is authenticated in (b), transmitting an authorization key and a pointer indicating a physical address of a requested document in said document database to the user terminal through the network,
wherein access to the requested document in the document data base is allowed only when user authentication information and the authorization key match the access credentials associated with the requested document.

38. The method as claimed in claim 37, further comprising:
receiving access event metadata corresponding to access of a specific document in said document database; and
updating, based on the access event metadata corresponding to the access of the specific document, a metadata record maintained for the specific document.

39. The method as claimed in claim 37, further comprising:
maintaining for each electronic document in the document database location metadata including a hyperlink to a location of the electronic document in the document database.

40. The method as claimed in claim 37, wherein the metadata maintained in (a) for an electronic document in the document database corresponds to properties of the electronic document in the document database.
